(19) Europäisches Patentamt
European Patent Office
Office européen des brevets

(11) **EP 4 685 182 A1**

(12) **EUROPEAN PATENT APPLICATION**
published in accordance with Art. 153(4) EPC

(43) Date of publication:
**28.01.2026 Bulletin 2026/05**

(21) Application number: 23928816.0

(22) Date of filing: **28.12.2023**

(51) International Patent Classification (IPC):
*C08L 23/04* (2006.01)    *B32B 27/32* (2006.01)
*C08J 5/18* (2006.01)    *C08L 57/02* (2006.01)

(52) Cooperative Patent Classification (CPC):
**B32B 27/32; C08J 5/18; C08L 23/04; C08L 57/02**

(86) International application number:
**PCT/JP2023/047218**

(87) International publication number:
**WO 2024/195252 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **23.03.2023  JP 2023046901**

(71) Applicant: **Idemitsu Kosan Co.,Ltd.**
**Tokyo 100-8321 (JP)**

(72) Inventor: **TAMURA Satoshi**
**Tokyo 100-8321 (JP)**

(74) Representative: **Gille Hrabal**
**Partnerschaftsgesellschaft mbB**
**Patentanwälte**
**Brucknerstraße 20**
**40593 Düsseldorf (DE)**

(54) **POLYETHYLENE RESIN COMPOSITION AND STRETCHED FILM**

(57)    Provided are: a polyethylene-based resin composition including: a high-density polyethylene (A); a linear low-density polyethylene (B); and a hydrogenated petroleum resin (C), wherein a mass ratio [(A)/(B)] of the high-density polyethylene (A) to the linear low-density polyethylene (B) is from 25/75 to 95/5, and wherein a content of the hydrogenated petroleum resin (C) is from 3 parts by mass to 25 parts by mass with respect to 100 parts by mass of a total amount of the high-density polyethylene (A) and the linear low-density polyethylene (B); and a stretched film including the polyethylene-based resin composition.

**EP 4 685 182 A1**

## Description

Technical Field

The present invention relates to a polyethylene-based resin composition and a stretched film.

Background Art

Polyolefins not only have excellent mechanical characteristics, such as tensile strength and shock resistance, and excellent waterproofness and chemical resistance but also have heat sealability, and are thus used in a wide range of fields such as a packaging container.

Meanwhile, petroleum resins are used as tackifiers for a hot-melt adhesive and a pressure-sensitive adhesive tape, and investigations have been made to improve the physical properties, workability, and the like of a plastic such as a polyolefin by adding a petroleum resin to the plastic to adjust the crystallinity and the like thereof.

For example, in PTL 1, there is a disclosure of a polypropylene resin composition including a crystalline polypropylene with high stereoregularity, and a petroleum resin and the like free of a polar group for the purpose of improving a water-vapor barrier property and transparency.

In addition, in PTL 2, there is a disclosure of a polyethylene film including: a resin that has a weight average molecular weight of less than 10,000 Da and is derived from polymerization of a C9 hydrocarbon feed stream, for example; and a polyethylene for the purpose of improving barrier properties. The polyethylene film has reduced water-vapor permeability as compared to that of a film not modified with a resin.

Citation List

Patent Literature

PTL 1: JP 07-076641 A
PTL 2: JP 2009-102651 A

Summary of Invention

Technical Problem

Among the polyolefins, polyethylenes are excellent in rigidity, strength, barrier properties, low-temperature characteristics, heat sealability, and the like, but have a high crystallinity degree and are crystallized rapidly, and hence breaking is liable to occur when a stretched film is formed at a high stretching ratio in particular. Accordingly, there are such problems as described below: stretching can be performed only within a narrow stretching temperature range; and a film thickness becomes uneven. Meanwhile, a film including a low-density polyethylene as a base material and a film in which a plasticizer or the like is used are poor in rigidity, which is a feature of polyethylene, and have reduced transparency and the like.

Accordingly, there has been demanded a polyethylene-based resin material capable of providing a film, which has a wide stretching temperature range, has high film thickness accuracy, and is excellent in transparency while maintaining rigidity, which is a feature of polyethylene.

Thus, an object of the present invention is to provide: a polyethylene-based resin composition, which has a wide stretchable temperature range and is excellent in formability when used for a stretched film, and thus can provide a stretched film excellent in film thickness uniformity, rigidity, and optical characteristics; and a stretched film excellent in film thickness uniformity, rigidity, and optical characteristics.

Solution to Problem

As a result of intensive investigations, the inventor of the present invention has found that a polyethylene-based resin composition including a plurality of specific polyethylenes and a hydrogenated petroleum resin in specific amounts can achieve the above-mentioned object.

That is, the present invention relates to the following items <1> to <10>.

<1> A polyethylene-based resin composition, including: a high-density polyethylene (A); a linear low-density polyethylene (B); and a hydrogenated petroleum resin (C), wherein a mass ratio [(A)/(B)] of the high-density polyethylene (A) to the linear low-density polyethylene (B) is from 25/75 to 95/5, and wherein a content of the hydrogenated petroleum resin (C) is from 3 parts by mass to 25 parts by mass with respect to 100 parts by mass of a total amount of the high-density polyethylene (A) and the linear low-density polyethylene (B).

<2> The polyethylene-based resin composition according to the above-mentioned item <1>, wherein a density of the high-density polyethylene (A) is from 942 $kg/m^3$ to 965 $kg/m^3$.

<3> The polyethylene-based resin composition according to the above-mentioned item <1> or <2>, wherein a density of the linear low-density polyethylene (B) is from 890 $kg/m^3$ to 938 $kg/m^3$.

<4> The polyethylene-based resin composition according to any one of the above-mentioned items <1> to <3>, wherein a softening point of the hydrogenated petroleum resin (C) is from 115°C to 160°C.

<5> The polyethylene-based resin composition according to any one of the above-mentioned items <1> to <4>, wherein the polyethylene-based resin composition is used for a stretched film.

<6> A stretched film, including the polyethylene-based resin composition of any one of the above-mentioned items <1> to <5>.

<7> The stretched film according to the above-mentioned item <6>, wherein the stretched film is a biaxially stretched film.

<8> A multilayer stretched film, including: a layer formed of the polyethylene-based resin composition (PE1) of any one of the above-mentioned items <1> to <5>; and a layer formed of a polyethylene-based resin (PE2) free of a hydrogenated petroleum resin.

<9> The multilayer stretched film according to the above-mentioned item <8>, wherein the multilayer stretched film includes the layer formed of the polyethylene-based resin composition (PE1) as an inner layer, and the layer formed of the polyethylene-based resin (PE2) as an outer layer on each side of the inner layer.

<10> A method of producing a stretched film, including stretching the polyethylene-based resin composition of any one of the above-mentioned items <1> to <5> at a stretching ratio in a machine direction of 2 times or more to form a stretched film.

Advantageous Effects of Invention

According to the present invention, there can be provided: the polyethylene-based resin composition, which has a wide stretchable temperature range and is excellent in formability when used for a stretched film, and thus can provide a stretched film excellent in film thickness uniformity, rigidity, and optical characteristics; and the stretched film excellent in film thickness uniformity, rigidity, and optical characteristics.

Description of Embodiments

[Polyethylene-based Resin Composition]

A polyethylene-based resin composition of the present invention is a polyethylene-based resin composition including: a high-density polyethylene (A); a linear low-density polyethylene (B); and a hydrogenated petroleum resin (C), wherein a mass ratio [(A)/(B)] of the high-density polyethylene (A) to the linear low-density polyethylene (B) is from 25/75 to 95/5, and a content of the hydrogenated petroleum resin (C) is from 3 parts by mass to 25 parts by mass with respect to 100 parts by mass of a total amount of the high-density polyethylene (A) and the linear low-density polyethylene (B).

<High-density Polyethylene (A)>

The polyethylene-based resin composition of the present invention includes the high-density polyethylene (A), and the mass ratio [(A)/(B)] of the high-density polyethylene (A) to the linear low-density polyethylene (B) described later is from 25/75 to 95/5.

It is conceived that the high-density polyethylene has a high crystallinity degree, and hence the use of the high-density polyethylene (A) in the polyethylene-based resin composition of the present invention can impart, in particular, rigidity to a stretched film to be obtained.

The density of the high-density polyethylene (A) is preferably from 942 $kg/m^3$ to 965 $kg/m^3$, more preferably from 942 $kg/m^3$ to 960 $kg/m^3$, still more preferably from 945 $kg/m^3$ to 960 $kg/m^3$, yet still more preferably from 950 $kg/m^3$ to 960 $kg/m^3$.

The melt flow rate (MFR) at 190°C of the high-density polyethylene (A) is preferably from 0.05 g/10 min to 30 g/10 min, more preferably from 0.1 g/10 min to 20 g/10 min, still more preferably from 0.2 g/10 min to 10 g/10 min, yet still more preferably from 0.3 g/10 min to 5 g/10 min, yet still more preferably from 0.4 g/10 min to 2 g/10 min. The MFR is measured by the measurement method specified in JIS K7210-1:2014, and measured under the conditions of a temperature of 190°C and a load of 2.16 kg. When the melt flow rate at 190°C of the high-density polyethylene (A) falls within the above-mentioned ranges, film formability becomes satisfactory, and rigidity can be imparted to a film to be obtained. Regarding the formability, in particular, the production speed of a film can be increased without breakage thereof during stretching.

The melting point of the high-density polyethylene (A) is preferably from 128°C to 142°C, more preferably from 129°C to 141°C, still more preferably from 130°C to 140°C, yet still more preferably from 131°C to 139°C. When the melting point of the high-density polyethylene (A) falls within the above-mentioned ranges, film stretchability becomes satisfactory, and rigidity and transparency can be imparted to a film to be obtained.

The high-density polyethylene (A) may be obtained by any method, and only needs to be obtained through polymerization using a heretofore known catalyst. The catalyst used for the polymerization is preferably a Ziegler catalyst, a Phillips catalyst, or a metallocene-based catalyst, and a Ziegler catalyst is preferred because a composition distribution on a high melting point side can be expanded and the stretching is facilitated.

The content of the high-density polyethylene (A) in the polyethylene-based resin composition of the present invention is preferably from 25 parts by mass to 95 parts by mass, more preferably from 30 parts by mass to 90 parts by mass, still more preferably from 30 parts by mass to 80 parts by mass, yet still more preferably from 30 parts by mass to 70 parts by mass, yet still more preferably from 30 parts by mass to 60 parts by mass, yet still more preferably from 40 parts by mass to 60 parts by mass with respect to 100 parts by mass of the total amount of the high-density polyethylene (A) and the linear low-density polyethylene (B).

<Linear Low-density Polyethylene (B)>

The polyethylene-based resin composition of the present invention includes the linear low-density polyethylene (B), and the mass ratio [(A)/(B)] of the high-density polyethylene (A) described above to the linear low-density polyethylene (B) is from 25/75 to 95/5.

It is conceived that the use of the linear low-density polyethylene (B) in the polyethylene-based resin composition of the present invention can impart, in particular, optical characteristics to a stretched film to be obtained, and can improve formability thereof.

The linear low-density polyethylene (B) is not particularly limited, but is preferably a copolymer (ethylene-$\alpha$-olefin copolymer) of ethylene and an $\alpha$-olefin having 4 to 18 carbon atoms.

Examples of the $\alpha$-olefin having 4 to 18 carbon atoms include a linear $\alpha$-olefin and a branched $\alpha$-olefin, and a linear $\alpha$-olefin is preferred.

Specific examples of the linear $\alpha$-olefin include 1-butene, 1-pentene, 1-hexene, 1-octene, 1-nonene, 1-decene, and 1-dodecene.

Among the linear $\alpha$-olefins, a linear $\alpha$-olefin having 4 to 10 carbon atoms is more preferred.

Those $\alpha$-olefins may be used alone or in combination thereof.

The content of an $\alpha$-olefin unit in the ethylene-$\alpha$-olefin copolymer is not particularly limited and may be appropriately selected in accordance with purposes.

In addition, a small amount of a diene component may be copolymerized in the linear low-density polyethylene (B). Examples of the diene component include dicyclopentadiene, ethylidene norbornene, 1,4-hexadiene, 1,9-decadiene, and vinylnorbomene.

The linear low-density polyethylene (B) is more preferably at least one kind selected from the group consisting of: an ethylene-1-hexene copolymer; and an ethylene-1-butene copolymer.

The linear low-density polyethylene (B) may be obtained by any method, and only needs to be obtained through polymerization using a heretofore known catalyst. The catalyst used for the polymerization is preferably a Ziegler catalyst, a Phillips catalyst, or a metallocene-based catalyst, and a metallocene-based catalyst is preferred because a composition distribution on a low melting point side can be narrowed, and occurrence of film tackiness can be prevented.

The density of the linear low-density polyethylene (B) is preferably from 890 kg/m$^3$ to 938 kg/m$^3$, more preferably from 900 kg/m$^3$ to 935 kg/m$^3$, still more preferably from 905 kg/m$^3$ to 930 kg/m$^3$, yet still more preferably from 910 kg/m$^3$ to 920 kg/m$^3$.

The difference between the density of the high-density polyethylene (A) and the density of the linear low-density polyethylene (B) is preferably from 4 kg/m$^3$ to 80 kg/m$^3$, more preferably from 20 kg/m$^3$ to 80 kg/m$^3$, still more preferably from 30 kg/m$^3$ to 70 kg/m$^3$, yet still more preferably from 30 kg/m$^3$ to 60 kg/m$^3$, yet still more preferably from 30 kg/m$^3$ to 50 kg/m$^3$. When the difference between the density of the high-density polyethylene (A) and the density of the linear low-density polyethylene (B) falls within the above-mentioned ranges, film stretchability becomes satisfactory, and the film thickness uniformity of a film to be obtained can be made satisfactory.

The melt flow rate (MFR) at 190°C of the linear low-density polyethylene (B) is preferably from 0.05 g/10 min to 30 g/10 min, more preferably from 0.1 g/10 min to 20 g/10 min, still more preferably from 0.3 g/10 min to 10 g/10 min, yet still more preferably from 0.5 g/10 min to 5 g/10 min, yet still more preferably from 0.5 g/10 min to 3 g/10 min. When the melt flow rate at 190°C of the linear low-density polyethylene (B) falls within the above-mentioned ranges, film formability becomes satisfactory, and rigidity can be imparted to a film to be obtained. Regarding the formability, in particular, the production speed of a film can be increased without breakage thereof during stretching. The MFR is measured by the measurement method specified in JIS K7210-1:2014, and measured under the conditions of a temperature of 190°C and a load of 2.16 kg.

The melting point of the linear low-density polyethylene (B) is preferably from 80°C to 127°C, more preferably from 90°C to 126°C, still more preferably from 100°C to 126°C, yet still more preferably from 110°C to 125°C. When the melting point of the linear low-density polyethylene (B) falls within the above-mentioned ranges, film stretchability becomes satisfactory, rigidity can be imparted to a film to be obtained, and occurrence of film tackiness can be prevented.

The difference between the melting point of the high-density polyethylene (A) and the melting point of the linear low-density polyethylene (B) is preferably from 1°C to 50°C, more preferably from 5°C to 45°C, still more preferably from 10°C to 40°C, yet still more preferably from 15°C to 35°C. When the difference between the melting point of the high-density polyethylene (A) and the melting point of the linear low-density polyethylene (B) falls within the above-mentioned ranges, stability during ejection with an extruder becomes satisfactory.

The content of the linear low-density polyethylene (B) in the polyethylene-based resin composition of the present invention is preferably from 5 parts by mass to 75 parts by mass, more preferably from 10 parts by mass to 70 parts by mass, still more preferably from 20 parts by mass to 70 parts by mass, yet still more preferably from 30 parts by mass to 70 parts by mass, yet still more preferably from 30 parts by mass to 60 parts by mass, yet still more preferably from 40 parts by mass to 60 parts by mass with respect to 100 parts by mass of the total amount of the high-density polyethylene (A) and the linear low-density polyethylene (B).

The mass ratio [(A)/(B)] of the high-density polyethylene (A) to the linear low-density polyethylene (B) is from 25/75 to 95/5, preferably from 30/70 to 90/10, more preferably from 30/70 to 80/20, still more preferably from 30/70 to 70/30, yet still more preferably from 30/70 to 60/40, yet still more preferably from 40/60 to 60/40. When the mass ratio of the high-density polyethylene (A) to the linear low-density polyethylene (B) falls within the above-mentioned ranges, both of film formability and the physical properties of a film to be obtained can be achieved. In particular, both of the transparency and rigidity of a film to be obtained can be made satisfactory.

<Hydrogenated Petroleum Resin (C)>

The polyethylene-based resin composition of the present invention includes the hydrogenated petroleum resin (C), and the content of the hydrogenated petroleum resin (C) is from 3 parts by mass to 25 parts by mass with respect to 100 parts by mass of the total amount of the high-density polyethylene (A) and the linear low-density polyethylene (B).

The hydrogenated petroleum resin refers to a petroleum resin obtained by adding hydrogen atoms to a petroleum resin. Examples of the hydrogenated petroleum resin include a fully hydrogenated petroleum resin in which substantially no unsaturated bond remains and a partially hydrogenated petroleum resin in which an unsaturated bond remains, and the hydrogenated petroleum resin (C) is preferably a fully hydrogenated petroleum resin.

The petroleum resin is a resin obtained by polymerizing or copolymerizing an olefinically unsaturated hydrocarbon having 4 to 11 carbon atoms, which is generated as a byproduct during the production of an olefin such as ethylene through thermal cracking of petroleum such as naphtha. Specifically, the petroleum resin is a resin obtained by polymerizing or copolymerizing one kind or two or more kinds of unsaturated compounds selected from aliphatic olefins or aliphatic diolefins each having 4 to 10 carbon atoms, and aromatic compounds each having 8 or more carbon atoms and an olefinically unsaturated bond.

The petroleum resin is preferably an aromatic petroleum resin, an aliphatic-aromatic copolymerized petroleum resin, or an aliphatic petroleum resin, and is more preferably an aliphatic-aromatic copolymerized petroleum resin.

The aromatic petroleum resin is a petroleum resin obtained by polymerizing an aromatic compound having an olefinically unsaturated bond. The aliphatic-aromatic copolymerized petroleum resin is a petroleum resin obtained by copolymerizing an aliphatic olefin or an aliphatic diolefin, and an aromatic compound having an olefinically unsaturated bond. The aliphatic petroleum resin is a petroleum resin obtained by polymerizing an aliphatic olefin or an aliphatic diolefin.

The aromatic compound having an olefinically unsaturated bond is preferably an aromatic compound having 8 or more carbon atoms and an olefinically unsaturated bond, and specific examples thereof include: styrenes, such as styrene, α-methylstyrene, β-methylstyrene, vinyltoluene, and vinylxylene; and indenes, such as indene, methylindene, and ethylindene.

In addition, the aliphatic olefin is preferably an aliphatic olefin having 4 to 10 carbon atoms, and specific examples thereof include butene, pentene, hexene, and heptene.

The aliphatic diolefin is preferably an aliphatic diolefin having 4 to 10 carbon atoms, and specific examples thereof include butadiene, pentadiene, isoprene, piperylene, cyclopentadiene, dicyclopentadiene, and methylpentadiene.

In addition, not all raw material compounds for the petroleum resin need to be byproducts generated during the production of an olefin through thermal cracking of petroleum such as naphtha, and a chemically synthesized unsaturated compound may be used.

Suitable examples of the petroleum resin include: a dicyclopentadiene-styrene-based petroleum resin obtained by copolymerization of cyclopentadiene or dicyclopentadiene, and a styrene; a C9-based petroleum resin obtained by polymerization of a C9 monomer, such as indene or vinyltoluene; a dicyclopentadiene-based petroleum resin obtained by polymerization of cyclopentadiene or dicyclopentadiene; and a C5-based petroleum resin obtained by polymerization of isoprene or piperylene.

The bromine number of the hydrogenated petroleum resin (C) is preferably from 0.5 g/100 g to 5 g/100 g, more preferably from 1.0 g/100 g to 4 g/100 g, still more preferably from 1.5 g/100 g to 3.5 g/100 g, yet still more preferably from 2.0 g/100 g to 3.0 g/100 g. When the bromine number of the hydrogenated petroleum resin (C) falls within the above-mentioned ranges, compatibility with a polyethylene raw material becomes satisfactory, and stretchability and modifying effects on physical properties become satisfactory. The bromine number may be determined by an electrometric titration method based on JIS K 2605:1996.

The weight average molecular weight of the hydrogenated petroleum resin (C) is preferably from 600 to 5,000, more preferably from 800 to 4,000, still more preferably from 1,000 to 3,000, yet still more preferably from 1,200 to 2,000. When the weight average molecular weight of the hydrogenated petroleum resin (C) falls within the above-mentioned ranges, the compatibility with a polyethylene raw material becomes satisfactory, and the stretchability and the modifying effects on physical properties, in particular, rigidity, become satisfactory. The weight average molecular weight may be determined by a gel permeation chromatography (GPC) method.

The glass transition temperature of the hydrogenated petroleum resin (C) is preferably from 50°C to 120°C, more preferably from 55°C to 110°C, still more preferably from 60°C to 100°C, yet still more preferably from 65°C to 90°C. When the glass transition temperature of the hydrogenated petroleum resin (C) falls within the above-mentioned ranges, the compatibility with a polyethylene raw material becomes satisfactory, and the stretchability and the modifying effects on physical properties, in particular, rigidity, become satisfactory. The glass transition temperature may be determined by differential scanning calorimetry (DSC) measurement.

The softening point of the hydrogenated petroleum resin (C) is preferably from 80°C to 180°C, more preferably from 110°C to 160°C, still more preferably from 115°C to 160°C, yet still more preferably from 120°C to 160°C, yet still more preferably from 130°C to 150°C. When the softening point of the hydrogenated petroleum resin (C) falls within the above-mentioned ranges, the compatibility with a polyethylene raw material becomes satisfactory, and the stretchability and the modifying effects on physical properties, in particular, rigidity, become satisfactory. The softening point may be measured by a ring and ball method.

The content of the hydrogenated petroleum resin (C) in the polyethylene-based resin composition of the present invention is from 3 parts by mass to 25 parts by mass, preferably from 3 parts by mass to 24 parts by mass, more preferably from 4 parts by mass to 23 parts by mass, still more preferably from 5 parts by mass to 23 parts by mass, yet still more preferably from 5 parts by mass to 22 parts by mass, yet still more preferably from 6 parts by mass to 20 parts by mass, yet still more preferably from 8 parts by mass to 15 parts by mass with respect to 100 parts by mass of the total amount of the high-density polyethylene (A) and the linear low-density polyethylene (B).

<Characteristics of Polyethylene-based Resin Composition>

The density of the polyethylene-based resin composition is preferably from 903 kg/m$^3$ to 964 kg/m$^3$, more preferably from 911 kg/m$^3$ to 962 kg/m$^3$, still more preferably from 919 kg/m$^3$ to 960 kg/m$^3$, yet still more preferably from 923 kg/m$^3$ to 958 kg/m$^3$, yet still more preferably from 930 kg/m$^3$ to 955 kg/m$^3$, yet still more preferably from 935 kg/m$^3$ to 955 kg/m$^3$. When the density of the polyethylene-based resin composition falls within the above-mentioned ranges, both of film formability and the physical properties of a film to be obtained can be achieved. In particular, both of the transparency and rigidity of a film to be obtained can be made satisfactory.

The melt flow rate (MFR) at 190°C of the polyethylene-based resin composition is preferably from 0.1 g/10 min to 30 g/10 min, more preferably from 0.3 g/10 min to 20 g/10 min, still more preferably from 0.5 g/10 min to 15 g/10 min, yet still more preferably from 0.7 g/10 min to 10 g/10 min. When the melt flow rate at 190°C of the polyethylene-based resin composition falls within the above-mentioned ranges, film formability becomes satisfactory, and rigidity can be imparted to a film to be obtained. Regarding the formability, in particular, the production speed of a film can be increased without breakage thereof during stretching. The MFR is measured by the measurement method specified in JIS K7210-1:2014, and measured under the conditions of a temperature of 190°C and a load of 2.16 kg.

It is preferred that the polyethylene-based resin composition have two or more endothermic peaks, or one or more endothermic peaks and one or more shoulders very close to the one or more endothermic peaks between 40°C and 140°C of a DSC curve obtained by differential scanning calorimetry measurement. In addition, it is more preferred that substantially no endothermic peak be present in the temperature ranges of less than 40°C and more than 140°C. When substantially a plurality of peaks, or peaks and shoulders are present in the above-mentioned range of the DSC curve, rigidity and transparency can be imparted to a film to be obtained, and occurrence of film tackiness can be prevented.

An additive, such as an antioxidant, a heat stabilizer, a weathering stabilizer, an antistatic agent, a slip agent, an antiblocking agent, an antifogging agent, a lubricant, a nucleating agent, a dye, a pigment, a natural oil, a synthetic oil, a wax, a filler, or an elastomer, may be further blended into the polyethylene-based resin composition of the present invention as required within the range not inhibiting the purpose of the present invention.

A hindered phenol-based, sulfur-based, lactone-based, organic phosphite-based, or organic phosphonite-based antioxidant, an antioxidant obtained by combining several kinds of those antioxidants, or the like may be used as the antioxidant. The antioxidant is preferably blended in the range of from 0.01 part by mass to 5 parts by mass with respect to 100 parts by mass of the resin composition.

An amide of a saturated or unsaturated fatty acid, such as lauric acid, palmitic acid, oleic acid, stearic acid, erucic acid, or behenic acid, or a bisamide of those saturated or unsaturated fatty acids may be used as the slip agent. Among them, erucamide and ethylene bis(stearamide) are preferred. The slip agent is preferably blended in the range of from 0.01 part by mass to 5 parts by mass with respect to 100 parts by mass of the resin composition.

Examples of the antiblocking agent may include silica fine powder, aluminum oxide fine powder, clay fine powder, a powdery or liquid silicon resin, a polytetrafluoroethylene resin, and a finely powdered crosslinked resin, such as crosslinked acrylic resin or methacrylic resin powder. Among them, silica fine powder and a finely powdered crosslinked resin are preferred.

The polyethylene-based resin composition of the present invention has a wide stretchable temperature range and is excellent in formability when used for a stretched film as described above, and hence the polyethylene-based resin composition is preferably used for a stretched film. Further, a stretched film obtained by using the polyethylene-based resin composition of the present invention is excellent in film thickness uniformity, rigidity, and optical characteristics.

<Method of producing Polyethylene-based Resin Composition>

The polyethylene-based resin composition of the present invention may be produced by mixing the high-density polyethylene (A), the linear low-density polyethylene (B), and the hydrogenated petroleum resin (C). Melt-kneading is preferred as a mixing method.

The polyethylene-based resin composition is preferably produced by melt-kneading the high-density polyethylene (A), the linear low-density polyethylene (B), the hydrogenated petroleum resin (C), and the above-mentioned additive further added as required. For example, pellets of the respective resins may be subjected to dry blending and then the resultant may be introduced into a hopper of an extruder for melt-kneading. In addition, one of the polyethylenes may be produced in a polymerization device, and then pellets of the other polyethylene and pellets of the hydrogenated petroleum resin may be added thereinto. Then, melt-kneading may be performed with an extruder connected to the polymerization device. In addition, a polyethylene may be added under a state in which the hydrogenated petroleum resin is present in a solvent, and pellets or a lump may be obtained after a solvent removal step and a drying step. The kneading may be performed with a kneading mixer. Examples of the kneading mixer include a high-speed mixer, a Banbury mixer, a continuous kneader, a single-screw or twin-screw extruder, a roll, and Brabender plastograph. Those materials may be kneaded with a kneader other than an extruder, and then may be formed into pellets with an extruder.

[Stretched Film and Multilayer Stretched Film]

A stretched film of the present invention is a stretched film including the above-mentioned polyethylene-based resin composition (polyethylene-based resin composition (PE1)) (the term "polyethylene-based resin composition of the present invention" described above is also referred to as "polyethylene-based resin composition (PE1)" herein). In addition, a multilayer stretched film of the present invention is a multilayer stretched film including: a layer formed of the polyethylene-based resin composition (PE1); and a layer formed of a polyethylene-based resin (PE2) free of a hydrogenated petroleum resin.

The stretched film of the present invention is a uniaxially stretched film or a biaxially stretched film, and is preferably a biaxially stretched film.

Regarding the stretching ratio of the stretched film of the present invention, an area ratio obtained by multiplying the stretching ratio in a machine direction (MD) by the stretching ratio in a transverse direction (TD), which is perpendicular to the machine direction, is preferably 3 times or more, more preferably 4 times or more, still more preferably 9 times or more. The area ratio is preferably 100 times or less. A film stretched at the above-mentioned ratio is excellent in rigidity and transparency.

When the stretched film is a uniaxially stretched film, the stretching ratio in the machine direction (MD) is preferably 2 times or more, more preferably 3 times or more, still more preferably 4 times or more, yet still more preferably 4.5 times or more. The stretching ratio in the machine direction (MD) is preferably 12 times or less, but the stretched film of the present invention using the above-mentioned polyethylene-based resin composition may be a film stretched at a stretching ratio in the machine direction (MD) of 12 times or more. The film stretched at a high ratio as described above is excellent in rigidity and transparency even when the film is thin.

When the stretched film is a biaxially stretched film, the stretching ratio in the machine direction (MD) is preferably 2 times or more, more preferably 3 times or more, still more preferably 4 times or more, yet still more preferably 4.5 times or more. The stretching ratio in the machine direction (MD) is preferably 12 times or less, but the stretched film of the present invention using the above-mentioned polyethylene-based resin composition may be a film stretched at a stretching ratio in the machine direction (MD) of 12 times or more. The film stretched at a high ratio described above is excellent in rigidity and transparency even when the film is thin.

When the stretched polyethylene film is a biaxially stretched film, the stretching ratio in the transverse direction (TD), which is perpendicular to the machine direction, is preferably 2 times or more, more preferably 4 times or more, still more preferably 6 times or more, yet still more preferably 8 times or more. The stretching ratio in the transverse direction (TD), which is perpendicular to the machine direction, is preferably 12 times or less, but the stretched polyethylene film of the present invention using the above-mentioned polyethylene-based resin composition may be a film stretched at a stretching ratio in the transverse direction (TD), which is perpendicular to the machine direction, of 12 times or more. The film stretched at a high ratio as described above is excellent in rigidity and transparency even when the film is thin.

The thickness of the stretched film of the present invention is preferably from 1 $\mu$m to 200 $\mu$m, more preferably from 4 $\mu$m to 80 $\mu$m, still more preferably from 7 $\mu$m to 50 $\mu$m, yet still more preferably from 10 $\mu$m to 30 $\mu$m.

The tensile elastic modulus in the MD direction of the stretched film of the present invention is preferably 500 MPa or more, more preferably 600 MPa or more, still more preferably 700 MPa or more, yet still more preferably 800 MPa or more. An upper limit thereof is not limited, and the tensile elastic modulus is preferably large but is typically 2,000 MPa or less.

When the stretched polyethylene film is a biaxially stretched film, the tensile elastic modulus in the TD direction of the stretched film of the present invention is preferably 1,000 MPa or more, more preferably 1,200 MPa or more, still more preferably 1,400 MPa or more, yet still more preferably 1,600 MPa or more. An upper limit thereof is not limited, and the tensile elastic modulus is preferably large but is typically 3,000 MPa or less. When the tensile elastic modulus of the stretched film falls within the above-mentioned ranges, the film becomes excellent in rigidity. In terms of practical properties, a stretched film having a tensile elastic modulus within the above-mentioned ranges is preferred because when the film is used as a packaging material, the film can be self-standing. The tensile elastic modulus may be measured by a method described in Examples.

The haze of the stretched film of the present invention is preferably 11% or less, more preferably 10% or less, still more preferably 8% or less, yet still more preferably 5% or less, yet still more preferably 3% or less. A lower limit value thereof only needs to be 0% or more. When the haze of the stretched film falls within the above-mentioned ranges, the film becomes excellent in transparency. In terms of practical properties, a stretched film having a haze within the above-mentioned ranges is preferred because when the film is used as a packaging material, packaged contents are visible. The haze may be measured by a method described in Examples.

The stretched film of the present invention has a feature of a uniform film thickness. The film thickness accuracy (coefficient of variation) of the stretched film of the present invention is preferably 11% or less, more preferably 10% or less, still more preferably 9% or less, yet still more preferably 8% or less, yet still more preferably 7% or less, yet still more preferably 6% or less. A lower limit value thereof only needs to be 0% or more. When the film thickness accuracy of the stretched film falls within the above-mentioned ranges, the film has uniform rigidity and transparency, and hence the film becomes excellent in rigidity and transparency as a whole. In addition, in terms of practical properties, a stretched film having a film thickness accuracy within the above-mentioned ranges is preferred because no wrinkle is formed during the winding of the film. The film thickness accuracy (coefficient of variation) may be measured by a method described in Examples.

The stretched film of the present invention may be a multilayer stretched film as long as the film includes a layer obtained by stretching the polyethylene-based resin composition (PE1).

When the stretched film of the present invention is a multilayer stretched film, a sealant layer or a skin layer may be arranged adjacent to the layer formed of the polyethylene-based resin composition (PE1).

Examples of resins used for the sealant layer and the skin layer include a polyolefin, a resin (e.g., an ethylene-vinyl alcohol copolymer) having a gas barrier property, and a resin (e.g., nylon) having rigidity. In addition, a thin film having a gas barrier property may be arranged as each of the innermost and outermost layers of the multilayer stretched film.

In addition, the multilayer stretched film of the present invention preferably includes: a layer formed of the polyethylene-based resin composition (PE1); and a layer formed of the polyethylene-based resin (PE2) free of the hydrogenated petroleum resin (C).

The polyethylene-based resin (PE2) may be formed of one kind of resin, or two or more kinds of resins.

The polyethylene-based resin (PE2) preferably contains a linear low-density polyethylene from the viewpoint of stretchability, and preferably contains a linear low-density polyethylene and a high-density polyethylene from the viewpoints of stretchability and rigidity.

The linear low-density polyethylene for forming the polyethylene-based resin (PE2) is more preferably the above-mentioned linear low-density polyethylene (B). Accordingly, the density thereof is preferably from 890 kg/m$^3$ to 938 kg/m$^3$,

and the other preferred physical properties are also preferably the same as those of the above-mentioned linear low-density polyethylene (B).

The high-density polyethylene for forming the polyethylene-based resin (PE2) is more preferably the above-mentioned high-density polyethylene (A). Accordingly, the density thereof is preferably from 942 kg/m$^3$ to 965 kg/m$^3$, and the other preferred physical properties are also preferably the same as those of the above-mentioned high-density polyethylene (A).

Further, when the polyethylene-based resin (PE2) contains the high-density polyethylene (A) and the linear low-density polyethylene (B), the mass ratio [(A)/(B)] therebetween is preferably from 25/75 to 95/5. When the mass ratio is set as described above, the stretchability of the layer formed of the polyethylene-based resin (PE2) can be matched with that of the layer formed of the polyethylene-based resin composition (PE1), and hence a homogeneous multilayer stretched film can be obtained. From the above-mentioned viewpoints, it is preferred that the mass ratio between the high-density polyethylene (A) and the linear low-density polyethylene (B) in the polyethylene-based resin (PE2) be substantially the same as the mass ratio between the high-density polyethylene (A) and the linear low-density polyethylene (B) in the polyethylene-based resin composition (PE1).

An antioxidant, a heat stabilizer, a weathering stabilizer, an antistatic agent, a slip agent, an antiblocking agent, an antifogging agent, a lubricant, a nucleating agent, a dye, a pigment, a natural oil, a synthetic oil, a wax, a filler, an elastomer, or the like may be further blended into the polyethylene-based resin (PE2) as required within the range not inhibiting the purpose of the present invention. In particular, when the layer formed of the polyethylene-based resin (PE2) serves an outer layer, the polyethylene-based resin (PE2) preferably contains an antistatic agent, a slip agent, an antiblocking agent, or a lubricant, and more preferably contains an antiblocking agent.

In addition, the polyethylene-based resin (PE2) is free of a hydrogenated petroleum resin. However, the polyethylene-based resin (PE2) includes a polyethylene-based resin containing a hydrogenated petroleum resin in a trace amount not affecting the effects of the present invention. Specifically, the content of the hydrogenated petroleum resin in the polyethylene-based resin (PE2) is preferably 1 mass% or less, more preferably 0 mass%, and it is still more preferred that the polyethylene-based resin (PE2) be free of the hydrogenated petroleum resin.

When the polyethylene-based resin (PE2) is free of the hydrogenated petroleum resin, bleedout of the hydrogenated petroleum resin can be suppressed, and formability can be made more satisfactory, while the wide stretchable temperature range is maintained. Accordingly, a stretched film having a uniform film thickness, and having excellent rigidity and optical characteristics can be obtained.

When the multilayer stretched film of the present invention includes the layer formed of the polyethylene-based resin composition (PE1) and the layer formed of the polyethylene-based resin (PE2), it is more preferred that the multilayer stretched film include the layer formed of the polyethylene-based resin composition (PE1) as an inner layer, and the layer formed of the polyethylene-based resin (PE2) as an outer layer on each side of the inner layer. With such configuration, the multilayer stretched film can be excellent in both of stretchability and rigidity and have balanced stretchability and rigidity.

<Method of producing Stretched Film>

The stretched film of the present invention only needs to have the above-mentioned configuration and may be obtained by any production method. However, the stretched film is preferably obtained by reheating a sheet including the above-mentioned polyethylene-based resin composition, and simultaneously or sequentially stretching the sheet in a uniaxial or biaxial direction. A preferred production method is described below.

The polyethylene-based resin composition is melt extruded, and caused to flow down from a T-shaped die in a curtain-like form, and the melted film is solidified immediately thereafter with a cooling roll submerged in a water bath to provide a primary sheet. Stretching is then performed with a subsequent stretching device. The resin temperature during the melt extrusion is preferably from 160°C to 280°C, more preferably from 180°C to 260°C. In addition, the temperature of the cooling roll is preferably from 0°C to 120°C, more preferably from 10°C to 100°C.

It is preferred that the primary sheet obtained through the extrusion be further stretched by uniaxial stretching, biaxial stretching, or the like to provide a stretched polyethylene film having been stretched and formed. Examples of a stretching method include sequential biaxial stretching or simultaneous biaxial stretching by a tenter method, and simultaneous biaxial stretching by an inflation method. In addition, a batch-type biaxial stretching device may be used. The method of producing the stretched film of the present invention preferably involves stretching the polyethylene-based resin composition at a stretching ratio in the machine direction of 2 times or more to form the stretched film. The stretching ratio may be appropriately determined in accordance with the application of the stretched polyethylene film, but is preferably set so as to be the above-mentioned stretching ratio.

Specifically, when the stretched film is a uniaxially stretched film, the stretching ratio in the machine direction (MD) is preferably 2 times or more, more preferably 3 times or more, still more preferably 4 times or more, yet still more preferably 4.5 times or more. The stretching ratio in the machine direction (MD) is preferably 12 times or less, but the stretched film of the present invention using the above-mentioned polyethylene-based resin composition may be a film stretched at a stretching ratio in the machine direction (MD) of 12 times or more. The film stretched at a high ratio as described above is excellent in rigidity and transparency even when the film is thin.

When the stretched film is a biaxially stretched film, the stretching ratio in the machine direction (MD) is preferably 2 times or more, more preferably 3 times or more, still more preferably 4 times or more, yet still more preferably 4.5 times or more. The stretching ratio in the machine direction (MD) is preferably 12 times or less, but the stretched film of the present invention using the above-mentioned polyethylene-based resin composition may be a film stretched at a stretching ratio in the machine direction (MD) of 12 times or more. The film stretched at a high ratio as described above is excellent in rigidity and transparency even when the film is thin.

When the stretched polyethylene film is a biaxially stretched film, the stretching ratio in the transverse direction (TD), which is perpendicular to the machine direction, is preferably 2 times or more, more preferably 4 times or more, still more preferably 6 times or more, yet still more preferably 8 times or more. The stretching ratio in the transverse direction (TD), which is perpendicular to the machine direction, is preferably 12 times or less, but the stretched polyethylene film of the present invention using the above-mentioned polyethylene-based resin composition may be a film stretched at a stretching ratio in the transverse direction (TD), which is perpendicular to the machine direction, of 12 times or more. The film stretched at a high ratio described above is excellent in rigidity and transparency even when the film is thin.

In addition, it is generally known that when sequential biaxial stretching is performed, the following failure occurs. For example, in a case where a film is oriented by stretching in the MD direction first and then further stretched in the TD direction, when the stretching ratio in the MD direction is too large, the film is liable to break when the stretching ratio in the TD direction is increased. When the above-mentioned polyethylene-based resin composition is used, satisfactory stretchability is obtained, and hence the film can be formed at a high stretching ratio.

In the sequential biaxial stretching by a tenter method, the primary film is reheated to a temperature (longitudinal (MD) stretching temperature) suitable for stretching, and is stretched in the machine direction (MD) between a slow (upstream) roll and a fast (downstream) roll. Next, the film enters a tenter part, is further heated to a temperature (transverse (TD) stretching temperature) suitable for stretching while both ends of the film stretched in the MD direction are held, and is stretched in the transverse direction (TD), which is perpendicular to the machine direction. Finally, the film subjected to the stretching process is subjected to heat treatment at a heat fixation temperature to stabilize the physical properties of the film, and is wound up by a winding machine. The obtained stretched film may be further formed into a shape in accordance with purposes by appropriately adjusting its width and length with a machine such as a slitter. In addition, the stretched polyethylene film of the present invention may be obtained by using the simultaneous biaxial stretching by a tenter method in which stretching is performed simultaneously in the machine direction (MD) and the transverse direction (TD) as described above.

The longitudinal (MD) stretching temperature and the transverse (TD) stretching temperature only need to be appropriately adjusted in accordance with the kind of the resin and stretching conditions. However, the longitudinal (MD) stretching temperature and the transverse (TD) stretching temperature are both preferably from 90°C to 140°C, more preferably from 100°C to 130°C, still more preferably from 102°C to 128°C, yet still more preferably from 104°C to 126°C. The longitudinal (MD) stretching temperature and the transverse (TD) stretching temperature do not need to be set to the same temperature and may be appropriately selected in accordance with the respective stretching ratios and stretching conditions. When the stretching temperatures fall within the above-mentioned ranges, formability becomes satisfactory. In particular, the film is not broken during forming, and adhesion to a roll and melt fracture can be prevented.

The heat fixation temperature is preferably from 100°C to 175°C, more preferably from 110°C to 170°C.

The stretched film of the present invention has a stretchable temperature range expanded to a lower temperature region as compared to that of a general polyethylene raw material. Thus, when the stretched film of the present invention is formed under such formation conditions that a film formed from a conventional polyethylene raw material cannot be stretched owing to occurrence of thickness unevenness or breakage of the film resulting from the thickness unevenness, stable stretching and forming can be maintained, and the film is thus excellent in elastic modulus.

A continuous forming device manufactured by, for example, Brückner Maschinenbau GmbH, The Japan Steel Works, Ltd., Darlet-Marchante-Technologie SA, Lindauer DORNIER GmbH, Andritz AG, or the like may be used to produce the stretched film of the present invention. Those devices each involve: extruding a polyethylene-based resin composition from a screw-type extruder; stretching the composition continuously in the machine direction (MD) in a longitudinal stretching process in which a low-speed roll and a high-speed roll are combined while preheating the composition on a line; further preheating the longitudinally stretched film while the film is conveyed; and stretching the film continuously in the transverse direction (TD), which is perpendicular to the machine direction, while both ends of the longitudinally stretched film are held along the longitudinal direction thereof and the film is conveyed on a heated wide line. Thus, a stretched film stretched in the machine direction (MD) and in the transverse direction (TD), which is perpendicular to the machine direction, can be produced continuously in one line.

Examples

Next, the present invention is described in more detail by way of Examples, but the present invention is by no means limited to these examples.

[Raw Material]

High-density polyethylene (A1) (HDPE (A1)): density: 958 kg/m$^3$, MFR: 1.0 g/10 min, melting point: 133°C, "HZ 3600F", manufactured by Prime Polymer Co., Ltd.

High-density polyethylene (A2) (HDPE (A2)): density: 944 kg/m$^3$, MFR: 0.45 g/10 min, melting point: 131°C, "SUNTEC F371", manufactured by Asahi Kasei Corporation Linear low-density polyethylene (B1) (LLDPE (B1)): density: 916 kg/m$^3$, MFR: 2.3 g/10 min, melting point: 116°C, "SP2020", manufactured by Prime Polymer Co., Ltd.

Linear low-density polyethylene (B2) (LLDPE (B2)): density: 907 kg/m$^3$, MFR: 2.0 g/10 min, melting point: 100°C, "KF270", manufactured by Japan Polyethylene Corporation Hydrogenated petroleum resin (C1): softening point: 140°C, "I-MARV P-140", manufactured by Idemitsu Kosan Co., Ltd.

Hydrogenated petroleum resin (C2): softening point: 125°C, "I-MARV P-125", manufactured by Idemitsu Kosan Co., Ltd.

[Production of Polyethylene-based Resin Composition and Stretched Film]

Example 1

50 Parts by mass of the high-density polyethylene (A1), 50 parts by mass of the linear low-density polyethylene (B1), and 11 parts by mass of the hydrogenated petroleum resin (C1) obtained in Production Example 2 were dry blended, and then a raw sheet having a thickness of 1 mm was produced with a sheet forming machine at a die temperature of 230°C, a chill roll temperature of 30°C, and a forming rate of 1 m/min. Next, with a continuous sequential biaxial stretching machine, the raw sheet was fed at 0.6 m/min, stretched at a ratio of 4 times in the longitudinal direction (MD direction) with a roll heated to from 116°C to 128°C, and subsequently stretched at a ratio of 8 times in the transverse direction (TD direction) with a tenter heated to from 102°C to 128°C to form a biaxially stretched film. The stretching was performed at the roll and tenter temperatures (stretching temperatures) of 1°C intervals, and a stretched film having the most satisfactory thickness accuracy was used for the evaluation of an elastic modulus and a haze. The TD stretching temperature during the forming of the film subjected to the evaluation of the elastic modulus and the haze is shown in Table 1. The results of stretchability (stretchable temperature range and thickness accuracy) and film physical properties (elastic modulus and haze) are shown in Table 1.

Examples 2 to 8 and Comparative Examples 1 to 5

Each stretched film was obtained in the same manner as in Example 1 except that: the kind and amount of the high-density polyethylene, the kind and amount of the linear low-density polyethylene, and the kind and amount of the hydrogenated petroleum resin were changed; and the temperatures (stretching temperatures) of the roll and the tenter were changed. A stretched film having the most satisfactory thickness accuracy was used for the evaluation of an elastic modulus and a haze. The TD stretching temperature during the forming of the film subjected to the evaluation of the elastic modulus and the haze is shown in Table 1. No stretchable temperature was found and no stretched film was obtained in each of Comparative Examples 4 and 5. The results of stretchability (stretchable temperature range and thickness accuracy) and film physical properties (elastic modulus and haze) are shown in Table 1.

[1. Melt Flow Rate (MFR) of Composition]

A sample obtained by re-forming each of the films obtained in Examples and Comparative Examples was used for the measurement of the melt flow rate (MFR) of the polyethylene-based resin composition. The melt flow rate (MFR) was measured by the measurement method specified in JIS K7210-1:2014 under the conditions of a temperature of 190°C and a load of 2.16 kg.

[2. Density of Composition]

A strand of the polyethylene-based resin composition obtained during the measurement of the melt flow rate (MFR) was treated at 120°C for 2 hours, and gradually cooled to room temperature (23°C) over 1 hour. The density was then measured by a D method (density gradient tube) in conformity with JIS K7112:1999.

[3. Stretchable Temperature Range (Evaluation of Stretchability)]

The stretchable temperature range was evaluated by using each of the raw sheets obtained in Examples and Comparative Examples. With the continuous sequential biaxial stretching machine, the raw sheet was fed at 0.6 m/min, stretched at a ratio of 4 times in the longitudinal direction (MD direction) with a roll heated to from 116°C to 128°C, and subsequently stretched at a ratio of 8 times in the transverse direction (TD direction) with a tenter heated to from 102°C to 128°C to form a biaxially stretched film.

The temperature (TD stretching temperature) of the tenter was changed at 1°C intervals during the forming, and the difference between the maximum and minimum values of the temperature of the tenter at which a stretched film was able to be obtained was defined as the stretchable temperature range. As the value of the stretchable temperature range becomes larger, the stretchability becomes more excellent.

[4. Thickness Accuracy (Coefficient of Variation) (Evaluation of Stretchability)]

The film thickness of the stretched film obtained in each of Examples and Comparative Examples was measured at 81 positions in total, that is, 9 positions in a lengthwise direction by 9 positions in a widthwise direction at 10 cm intervals. An average film thickness and a standard deviation were calculated from the obtained data, and a coefficient of variation was determined by the following formula (1). When a plurality of stretched films were obtained in each of Examples and Comparative Examples, the value of the coefficient of variation of a stretched film having the smallest coefficient of variation was adopted as the coefficient of variation of the stretched film of the corresponding Example or Comparative Example. As the value of the coefficient of variation becomes smaller, the thickness accuracy becomes higher, the film thickness uniformity becomes more satisfactory, and the stretchability becomes more excellent.

Coefficient of variation (%)=standard deviation ($\mu$m)/average film thickness ($\mu$m)$\times$100　　　　　　　　　(1)

[5. Tensile Elastic Modulus (Film Physical Property Evaluation)]

The stretched film obtained in each of Examples and Comparative Examples was punched into a JIS 1/2 dumbbell shape with a punching machine such that the tensile direction was aligned with the MD direction. A tensile test was conducted with a tensile tester (SHIMADZU AUTOGRAPH AGX) under the conditions of a chuck-to-chuck distance of 40 mm and a test speed of 300 mm/min, and a tensile elastic modulus (in the MD direction) was calculated.

Similarly, the stretched film obtained in each of Examples and Comparative Examples was punched into a dumbbell shape such that the tensile direction was aligned with the TD direction. A tensile test was conducted, and a tensile elastic modulus (in the TD direction) was calculated.

As the value of the tensile elastic modulus becomes larger, the rigidity (strength) becomes more excellent.

[6. Haze (Film Physical Property Evaluation)]

Measurement was conducted in conformity with JIS K7136:2000 by using the stretched film obtained in each of Examples and Comparative Examples, and a haze was calculated. As the value of the haze becomes smaller, the transparency becomes more excellent.

[Table 1]

Table 1

| Item | | Unit | Example | | | | | | | |
|---|---|---|---|---|---|---|---|---|---|---|
| | | | 1 | 2 | 3 | 4 | 5 | 6 | 7 | 8 |
| Polyethylene-based resin composition | HDPE (A1) (density: 958 kg/m³) | parts by mass | 50 | 50 | 50 | 50 | - | - | 70 | 25 |
| | HDPE (A2) (density: 944 kg/m³) | | - | - | - | - | 50 | 50 | - | - |
| | LLDPE (B1) (density: 916 kg/m³) | | 50 | 50 | 50 | - | 50 | - | 30 | 75 |
| | LLDPE (B2) (density: 907 kg/m³) | | - | - | - | 50 | - | 50 | - | - |
| | Hydrogenated petroleum resin (C1) (softening point: 140°C) | | 11 | 5 | - | 11 | 11 | 11 | 11 | 11 |
| | Hydrogenated petroleum resin (C2) (softening point: 125°C) | | - | - | 11 | - | - | - | - | - |
| | MFR of composition | g/10 min | 1.9 | 1.7 | 2.0 | 1.8 | 1.4 | 1.3 | 1.7 | 2.3 |
| | Density of composition | kg/m³ | 948 | 942 | 948 | 944 | 942 | 938 | 956 | 939 |
| Stretchability | Stretchable temperature range | °C | 11 | 9 | 11 | 13 | 9 | 11 | 5 | 14 |
| | TD stretching temperature | °C | 108 | 108 | 108 | 106 | 106 | 104 | 124 | 113 |
| | Thickness accuracy (coefficient of variation) | % | 5 | 7 | 5 | 5 | 7 | 5 | 8 | 8 |
| Film physical properties | Tensile elastic modulus (MD direction) | MPa | 1,060 | 980 | 1,020 | 960 | 940 | 900 | 1,240 | 740 |
| | Tensile elastic modulus (TD direction) | | 2,240 | 2,120 | 2,200 | 2,020 | 1,980 | 1,900 | 2,420 | 1,900 |
| | Haze | % | 2 | 7 | 2 | 2 | 2 | 2 | 10 | 5 |

Table 1 (continued)

| Item | | Unit | Comparative Example | | | | |
|---|---|---|---|---|---|---|---|
| | | | 1 | 2 | 3 | 4 | 5 |
| Polyethylene-based resin composition | HDPE (A1) (density: 958 kg/m$^3$) | parts by mass | 50 | - | - | 100 | 100 |
| | HDPE (A2) (density: 944 kg/m$^3$) | | - | - | - | - | - |
| | LLDPE (B1) (density: 916 kg/m$^3$) | | 50 | 100 | 100 | - | - |
| | LLDPE (B2) (density: 907 kg/m$^3$) | | - | - | - | - | - |
| | Hydrogenated petroleum resin (C1) (softening point: 140°C) | | - | - | 11 | - | 11 |
| | Hydrogenated petroleum resin (C2) (softening point: 125°C) | | - | - | - | - | - |
| | MFR of composition | g/10 min | 1.5 | 2.3 | 2.7 | 1.0 | 1.4 |
| | Density of composition | kg/m$^3$ | 937 | 916 | 929 | 958 | 967 |
| Stretchability | Stretchable temperature range | °C | 5 | 5 | 7 | 0 | 0 |
| | TD stretching temperature | °C | 120 | 104 | 104 | - | - |
| | Thickness accuracy (coefficient of variation) | % | 12 | 16 | 12 | - | - |
| Film physical properties | Tensile elastic modulus (MD direction) | MPa | 1,000 | 330 | 340 | - | - |
| | Tensile elastic modulus (TD direction) | | 2,530 | 560 | 490 | - | - |
| | Haze | % | 11 | 3 | 2 | - | - |

From the results in Table 1, it has been found that the polyethylene-based resin compositions of Examples each have a wide stretchable temperature range and are each excellent in film thickness uniformity. Further, it has been found that the stretched films of Examples each have a high elastic modulus and a satisfactory haze, and hence the resultant stretched films are excellent in rigidity and optical characteristics. As described above, the polyethylene-based resin composition of the present invention has a wide stretchable temperature range, is excellent in film thickness uniformity, and is hence excellent in formability when used for a stretched film. In addition, the resultant stretched film is excellent in rigidity and optical characteristics.

**Claims**

1. A polyethylene-based resin composition, comprising:

   a high-density polyethylene (A);
   a linear low-density polyethylene (B); and
   a hydrogenated petroleum resin (C),
   wherein a mass ratio [(A)/(B)] of the high-density polyethylene (A) to the linear low-density polyethylene (B) is from 25/75 to 95/5, and
   wherein a content of the hydrogenated petroleum resin (C) is from 3 parts by mass to 25 parts by mass with respect to 100 parts by mass of a total amount of the high-density polyethylene (A) and the linear low-density polyethylene (B).

2. The polyethylene-based resin composition according to claim 1, wherein a density of the high-density polyethylene (A) is from 942 kg/m$^3$ to 965 kg/m$^3$.

3. The polyethylene-based resin composition according to claim 1 or 2, wherein a density of the linear low-density polyethylene (B) is from 890 kg/m$^3$ to 938 kg/m$^3$.

4. The polyethylene-based resin composition according to any one of claims 1 to 3, wherein a softening point of the hydrogenated petroleum resin (C) is from 115°C to 160°C.

5. The polyethylene-based resin composition according to any one of claims 1 to 4, wherein the polyethylene-based resin composition is used for a stretched film.

6. A stretched film, comprising the polyethylene-based resin composition of any one of claims 1 to 5.

7. The stretched film according to claim 6, wherein the stretched film is a biaxially stretched film.

8. A multilayer stretched film, comprising:

   a layer formed of the polyethylene-based resin composition (PE1) of any one of claims 1 to 5; and
   a layer formed of a polyethylene-based resin (PE2) free of a hydrogenated petroleum resin.

9. The multilayer stretched film according to claim 8, wherein the multilayer stretched film comprises the layer formed of the polyethylene-based resin composition (PE1) as an inner layer, and the layer formed of the polyethylene-based resin (PE2) as an outer layer on each side of the inner layer.

10. A method of producing a stretched film, comprising stretching the polyethylene-based resin composition of any one of claims 1 to 5 at a stretching ratio in a machine direction of 2 times or more to form a stretched film.

## INTERNATIONAL SEARCH REPORT

| International application No. |
|---|
| **PCT/JP2023/047218** |

### A. CLASSIFICATION OF SUBJECT MATTER

***C08L 23/04***(2006.01)i; ***B32B 27/32***(2006.01)i; ***C08J 5/18***(2006.01)i; ***C08L 57/02***(2006.01)i
FI:    C08L23/04; C08L57/02; B32B27/32 E; C08J5/18 CES

According to International Patent Classification (IPC) or to both national classification and IPC

### B. FIELDS SEARCHED

Minimum documentation searched (classification system followed by classification symbols)

C08L23/04; B32B27/32; C08J5/18; C08L57/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2023-31061 A (IDEMITSU KOSAN CO., LTD.) 08 March 2023 (2023-03-08) claims, paragraphs [0005], [0011], [0019], [0068], [0077]-[0101] | 1-10 |
| Y | JP 61-237640 A (FUJI PHOTO FILM CO., LTD.) 22 October 1986 (1986-10-22) claims, column 2, lines 9-17, column 8, line 12 to column 9, line 8, column 11, lines 2-7, column 12, line 11 to column 13, line 8, column 16, line 16 to column 17, line 3, column 19, line 19 to column 20, line 6, column 39, lines 1-10, column 39, line 11 to column 50, line 7 | 1-10 |
| Y | JP 2002-249622 A (MITSUI CHEMICALS, INC.) 06 September 2002 (2002-09-06) claims, paragraphs [0015], [0016] | 1-10 |
| X | JP 2015-180714 A (NIPPON POLYETHYLENE KK) 15 October 2015 (2015-10-15) claims, paragraphs [0014], [0087], [0122]-[0135] | 1-4 |
| X | JP 2009-102651 A (EASTMAN CHEMICAL RESINS, INC.) 14 May 2009 (2009-05-14) claims, paragraphs [0021], [0022], [0032], [0047]-[0079] | 1-7, 10 |
| Y | | 8-9 |

✓ Further documents are listed in the continuation of Box C. | ✓ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 March 2024** | **26 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 685 182 A1**

| International application No. |
| --- |
| **PCT/JP2023/047218** |

**C.    DOCUMENTS CONSIDERED TO BE RELEVANT**

| Category* | Citation of document, with indication, where appropriate, of the relevant passages | Relevant to claim No. |
| --- | --- | --- |
| X | JP 1-168426 A (TOA NENRYO KOGYO KK) 03 July 1989 (1989-07-03) claims, p. 1, lower right column, line 20 to p. 2, upper left column, line 4, p. 2, upper right column, lines 16-20, p. 4, upper left column, line 5 to p. 4, lower section, table 1 | 1-10 |
| A | JP 2-134246 A (TONEN SEKIYUKAGAKU K. K.) 23 May 1990 (1990-05-23) p. 6, lower right column, line 20 to p. 7, upper left column, line 1 | 1-10 |
| A | WO 2022/024687 A1 (IDEMITSU KOSAN CO., LTD.) 03 February 2022 (2022-02-03) paragraph [0122] | 1-10 |
| A | CN 113969007 A (INSTITUTE OF ADVANCED TECHNOLOGY, UNIVERSITY OF SCIENCE AND TECHNOLOGY OF CHINA) 25 January 2022 (2022-01-25) entire text | 1-10 |
| A | JP 2019-178281 A (TOSOH CORP.) 17 October 2019 (2019-10-17) entire text | 1-10 |

Form PCT/ISA/210 (second sheet) (July 2022)

### INTERNATIONAL SEARCH REPORT
**Information on patent family members**

International application No.

**PCT/JP2023/047218**

| Patent document cited in search report | | | Publication date (day/month/year) | Patent family member(s) | | | Publication date (day/month/year) |
|---|---|---|---|---|---|---|---|
| JP | 2023-31061 | A | 08 March 2023 | (Family: none) | | | |
| JP | 61-237640 | A | 22 October 1986 | (Family: none) | | | |
| JP | 2002-249622 | A | 06 September 2002 | (Family: none) | | | |
| JP | 2015-180714 | A | 15 October 2015 | US | 2016/0284435 | A1 | |
| | | | | claims, paragraphs [0025], [0124]-[0127], [0171]-[0185] | | | |
| | | | | WO | 2015/064652 | A1 | |
| | | | | CN | 105705571 | A | |
| JP | 2009-102651 | A | 14 May 2009 | US | 2002/0103300 | A1 | |
| | | | | claims, paragraphs [0024], [0025], [0035], examples | | | |
| | | | | US | 2003/0055175 | A1 | |
| | | | | WO | 1998/055537 | A1 | |
| | | | | EP | 1609811 | A2 | |
| | | | | TW | 531548 | B | |
| | | | | CN | 1228101 | A | |
| | | | | KR | 10-0573305 | B1 | |
| JP | 1-168426 | A | 03 July 1989 | US | 5043204 | A | |
| | | | | claims, columns 2, 3, 10-12, table 2 | | | |
| | | | | US | 5145728 | A | |
| | | | | EP | 319258 | A2 | |
| | | | | KR | 10-1989-0008221 | A | |
| JP | 2-134246 | A | 23 May 1990 | US | 5185203 | A | |
| | | | | example 1 | | | |
| | | | | EP | 369705 | A2 | |
| | | | | KR | 10-1991-0009788 | A | |
| WO | 2022/024687 | A1 | 03 February 2022 | US | 2023/0235202 | A1 | |
| | | | | paragraph [0326] | | | |
| CN | 113969007 | A | 25 January 2022 | (Family: none) | | | |
| JP | 2019-178281 | A | 17 October 2019 | (Family: none) | | | |

Form PCT/ISA/210 (patent family annex) (July 2022)

**EP 4 685 182 A1**

**REFERENCES CITED IN THE DESCRIPTION**

**Patent documents cited in the description**

- JP 7076641 A

- JP 2009102651 A